(19) Europäisches Patentamt
European Patent Office
Office européen des brevets

(11) **EP 4 476 524 B1**

(12) **FASCICULE DE BREVET EUROPEEN**

(45) Date de publication et mention
de la délivrance du brevet:
**08.07.2026 Bulletin 2026/28**

(21) Numéro de dépôt: **23705209.7**

(22) Date de dépôt: **07.02.2023**

(51) Classification Internationale des Brevets (IPC):
**G01N 15/08** *(2006.01)*    **G01N 15/00** *(2024.01)*
**G01N 15/01** *(2024.01)*

(52) Classification Coopérative des Brevets (CPC):
**G01N 15/0826;** G01N 15/01

(86) Numéro de dépôt international:
**PCT/EP2023/053024**

(87) Numéro de publication internationale:
**WO 2023/152143 (17.08.2023 Gazette 2023/33)**

(54) **DISPOSITIF ET PROCÉDÉ DE MESURE DE PERMÉABILITÉ**

VORRICHTUNG UND VERFAHREN ZUR PERMEABILITÄTSMESSUNG

PERMEABILITY MEASUREMENT DEVICE AND METHOD

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **08.02.2022 FR 2201116**

(43) Date de publication de la demande:
**18.12.2024 Bulletin 2024/51**

(73) Titulaire: **Centre National de la Recherche
Scientifique
75016 Paris (FR)**

(72) Inventeurs:
• **CACHEUX, Jean**
  **Tokyo 154--0022 (JP)**
• **BANCAUD, Aurélien**
  **TOKYO-to, Tokyo 114--0023 (JP)**
• **MATSUNAGA, Yukiko**
  **Tokyo 153--8505 (JP)**
• **JALABERT, Laurent**
  **31660 BESSIERES (FR)**

(74) Mandataire: **Hautier IP
20, rue de la Liberté
06000 Nice (FR)**

(56) Documents cités:
**WO-A1-2013/086502    WO-A2-2016/190939**

• **YOUNG E W ET AL: "Technique for real-time
measurements of endothelial permeability in a
microfluidic membrane chip using laser-induced
fluorescence detection", ANALYTICAL
CHEMISTRY, AMERICAN CHEMICAL SOCIETY,
US, vol. 82, no. 3, 5 January 2010 (2010-01-05),
pages 808 - 816, XP002721402, ISSN: 0003-2700,
[retrieved on 20100105], DOI: 10.1021/
AC901560W**
• **JEAN CACHEUX ET AL: "Asymmetry of tensile
vs. compressive elasticity and permeability
contributes to the regulation of exchanges in
collagen gels", ARXIV.ORG, CORNELL
UNIVERSITY LIBRARY, 201 OLIN LIBRARY
CORNELL UNIVERSITY ITHACA, NY 14853, 2
December 2022 (2022-12-02), XP091384729**

## Description

### Domaine technique

La présente invention concerne un dispositif pour mesurer la perméabilité d'un matériau poreux à un fluide. L'invention concerne également un procédé mettant en œuvre un tel dispositif.

Le domaine de l'invention est, de manière non limitative, celui de la caractérisation des milieux et matériaux.

### État de la technique

En biologie, la perméabilité d'un matériau, tel qu'un tissu cellulaire, est une grandeur centrale pour les mécanismes d'échange. En effet, les matrices des tissus sont poreuses aux fluides et une pression hydrostatique est maintenue par la pression sanguine et vers le système lymphatique. La perméabilité est régulée par les tissus cellulaires d'interface (appelés endothélium ou épithélium) qui forment des barrières aux écoulements. Une résistance aux écoulements plus forte se traduit par un coefficient de perméabilité plus faible.

Pour connaître la perméabilité d'un milieu ou un matériau à un fluide, il est nécessaire de déterminer la capacité de ce milieu ou matériau à être traversé par le fluide sous l'effet d'une différence de pression de part et d'autre de ce milieu ou matériau. Les appareils de mesure de la perméabilité s'appellent « perméamètres ». Dans le contexte des matériaux biologiques, par exemple les tissus corporels, la perméabilité est couplée aux propriétés mécaniques du matériau ; on parle alors de poromécanique.

La détermination de la perméabilité d'un milieu ou matériau nécessite de mesurer le débit d'écoulement du fluide à travers ce matériau et le gradient de pression le long de la direction de cet écoulement.

Dans les outils de caractérisation des flux interstitiels de matrices cellulaires, ces deux grandeurs sont rarement connues de manière simultanée.

Des méthodes de mesure de la perméabilité de tissus cellulaires sont résumées, par exemple, dans les articles « Transport of Molecules in the Tumor interstitium : A review », Cancer Res 47 : 3039 *et « Measurement of interstitialfluid pressure : Comparison of Methods* », Annals Biomed Engineering 14 : 139.

Sont également connues des méthodes mesurant les flux de liquides à travers des milieux ou barrières cellulaires, en particulier en suivant la dynamique de mouvement des traceurs fluorescents, qui attestent de la vitesse d'un écoulement.

Enfin, des méthodes électriques peuvent être utilisées pour caractériser des barrières, comme celle mesurant la résistance électrique transépithéliale (TEER, pour *Transendothelial Electrical Resistance Resistance*), permettant de mesurer un flux ionique avec une pression nulle.

Ces deux approches mesurent ainsi la perméabilité à des macromolécules ou des ions. Lorsqu'il s'agit de caractériser la perméabilité à un fluide, il existe notamment des méthodes mesurant la pression locale dans les tissus, comme celle de la « *wick-in needle* », correspondant à une aiguille piquée dans une zone cible du corps et équipée d'un capteur de pression déporté. Dans d'autres cas, une mesure de débit de fluide est effectuée à l'aide de débitmètres. Les méthodes et outils mentionnés ne permettent cependant pas de mesurer directement à la fois le débit d'écoulement et le gradient de pression à travers le milieu ou matériau, à l'aide d'un seul moyen de mesure.

Dans le domaine des matériaux, notamment de construction, d'autres outils sont connus pour mesurer la perméabilité. Par exemple, la perméabilité du béton à un fluide peut être déterminée à l'aide d'un perméabilimètre de Blaine comme décrit par exemple dans J.P. Ollivier, M. Massat, « *Permeability and microstructure of concrete: a review of modelling* », Cement and Concrete Research, Volume 22, 1992, pages 503-514. Le perméabilimètre de Blaine permet une telle mesure avec un capteur de pression couplé à un capteur de débit.

Le document WO2016190939 divulgue un système pour quantifier la perméabilité dynamique de couches de cellules biologiques. Le système comprend un dispositif micro-fluidique avec un premier et un deuxième micro-canal. Un gradient de pression est mis en place de part et d'autre de la membrane 30. Il est fait mention de la présence de capteurs de pression aux endroits nécessaires.

L'invention a pour objet de proposer un dispositif et un procédé de mesure de la perméabilité d'un matériau poreux pouvant pallier ces inconvénients.

### Exposé de l'invention

Un but de la présente invention est de proposer un dispositif et un procédé de détermination de la perméabilité d'un matériau poreux permettant de mesurer directement le gradient de pression et le débit d'un fluide à travers le matériau poreux.

Un autre but de la présente invention est de proposer un dispositif et un procédé de détermination de la perméabilité d'un matériau poreux dont la mise en œuvre permet de facilement mesurer différents types de matériaux et d'être adaptée à un balayage de conditions expérimentales avec une seule mesure.

Il est encore un but de la présente invention de proposer un dispositif et un procédé de détermination de la perméabilité d'un matériau poreux dont la mise en œuvre peut être automatisée.

Au moins un de ces buts est atteint avec un dispositif de mesure de la perméabilité d'un matériau poreux à un fluide, selon la revendication 1.

Le dispositif de mesure selon l'invention peut être considéré comme un perméamètre, c'est-à-dire un appareil de mesure de la perméabilité. La réponse du dispositif peut être considérée comme celle d'une capacité. Ceci signifie que l'application de la pression au volume de fluide n'est pas réalisée en régime permanent. Ainsi, il est possible d'obtenir une courbe de réponse de la perméabilité en fonction du gradient de pression avec une seule application de pression au volume de fluide.

Avantageusement, le dispositif selon l'invention permet de mesurer directement le débit du fluide à travers le matériau poreux et le gradient de pression appliqué à ce matériau. La perméabilité du matériau mesuré peut être immédiatement déduite de ces deux grandeurs.

Le dispositif selon l'invention permet en outre une intégration du capteur de pression très simple et aisée à mettre en œuvre. Un capteur standard disponible dans le commerce peut être utilisé dans le dispositif.

En effet, le capteur de pression peut être déporté à distance de la cavité d'air. Selon un exemple, le capteur de pression peut être relié à la cavité d'air avec un tube de volume connu.

Aussi, les mêmes moyens de contrôle de pression, tel qu'un seul contrôleur de pression, peuvent être utilisés pour une pluralité d'ensembles module matériau - cavité d'air.

Le dispositif selon l'invention étant compatible avec des conditions d'incubation cellulaire, il est par exemple possible de réaliser des mesures avec le dispositif selon l'invention dans un incubateur dans le cadre de l'ingénierie tissulaire, en particulier pour la fabrication d'organes sur puce. Les mesures et le contrôle de pression sont réalisés à distance.

Le dispositif selon l'invention est facilement adaptable à la conception d'organes sur puces.

En outre, le dispositif selon l'invention peut être mis en œuvre avec une pluralité de type de matériaux poreux différents. Par exemple, tous types de tissus cellulaires, avec ou sans couche barrière, ou d'autres matériaux poreux, tels que des films de polymère ou des bétons, peuvent être mesurés avec le dispositif selon l'invention.

Le fluide peut être un liquide ou un gaz, par exemple de l'eau ou de l'air.

Selon un mode de réalisation, les moyens numériques peuvent en outre être configurés pour déterminer le module d'élasticité du matériau poreux à partir du gradient de pression entre le volume de fluide et la cavité d'air en fonction du temps.

En mécanique, un matériau peut être caractérisé par son module d'Young, ou module d'élasticité, et son coefficient de Poisson.

Il est possible, à partir de la mesure de la pression dans la cavité en fonction du temps, d'accéder à la fois aux propriétés mécaniques et hydrodynamiques du matériau en exploitant la cinétique différentiée de la réponse de pression. Lorsqu'une pression hydrostatique est appliquée au matériau, le matériau est soumis à une déformation, contribuant à l'augmentation de la pression dans la cavité d'air due à la perméabilité du matériau. Ces deux mécanismes ont des échelles de temps très différentes, permettant l'analyse du gradient de pression.

L'amplitude de la déformation augmente à mesure que l'élasticité du matériau augmente, correspondant à un module d'Young diminuant. Le coefficient de Poisson permet de caractériser la contraction du matériau perpendiculairement à la direction d'application de la pression hydrostatique, cette contraction étant due à des réorganisations structurelles du matériau. Pour un module d'Young donné, le coefficient de Poisson influe sur les premiers temps de la dynamique de réponse de déformation.

Selon un mode de réalisation avantageux, le volume de fluide peut être contenu partiellement dans un microcanal traversant le matériau poreux.

Le support peut également comprendre un système de canaux et réservoirs dans lequel est contenu et acheminé le volume de fluide. Ce système est en communication fluidique avec le microcanal.

Selon un exemple de mise en œuvre, le support peut être en silicone, et notamment de type polydiméthylsiloxane (PDMS).

Le PDMS présente des propriétés avantageuses. Il est notamment chimiquement inerte, non toxique et transparent.

Pour pouvoir réaliser des mesures sélectives de flux à travers la couche de matériau poreux, il est nécessaire qu'il n'y ait pas d'interstices au niveau des interfaces matériau - support, afin de garantir l'étanchéité au niveau des interfaces. Pour cela, une jonction étanche entre les deux matériaux est prévue pour la réalisation du module matériau.

Selon un premier exemple de mise en œuvre, le matériau poreux peut être collé au support de manière permanente.

Le collage permanent est notamment adapté lorsque le matériau poreux est du collagène. Celui-ci est en effet très mou et fragile, et le collage au support représente un moyen de fixation non détériorant.

Selon un autre exemple de mise en œuvre, le matériau poreux peut être maintenu par serrage au support, avec des joints isolants au niveau de l'interface matériau - support.

Selon un autre aspect de la même invention, il est proposé un procédé pour mesurer la perméabilité d'un matériau poreux à un fluide, selon la revendication 9.

Le procédé selon l'invention permet de déterminer la perméabilité d'un matériau poreux, c'est-à-dire sa capacité à se laisser traverser par un fluide sous l'effet d'un gradient de pression.

Le procédé selon l'invention permet de mesurer directement le débit du fluide à travers le matériau poreux et la différence de pression de part et d'autre de ce matériau. La perméabilité du matériau mesuré peut être immédiatement déduite de ces deux grandeurs.

Selon un mode de réalisation, le procédé peut comprendre en outre une étape de détermination du module d'élasticité du matériau poreux à partir du gradient de pression entre le volume de fluide et la cavité d'air (4), VP, en fonction du temps.

Avantageusement, la mesure de la pression dans la cavité peut être réalisée au moyen d'un capteur de pression à distance relié à la cavité d'air.

Alternativement, la mesure de la pression dans la cavité d'air peut être réalisée au moyen d'un capteur de pression à proximité immédiate de la cavité.

Selon un mode de réalisation, la mesure de la pression dans la cavité peut être réalisée à intervalle régulier à partir du début de l'application de la pression, $P_B$, au volume de fluide.

La fréquence de la mesure de la pression dans la cavité peut être adaptée en fonction de barrière du matériau poreux.

Selon un mode de réalisation, le procédé selon l'invention peut comprendre en outre une phase préalable de préparation. La phase de préparation peut comprendre les étapes suivantes :

- fourniture d'un support de matériau, de la cavité d'air et du matériau poreux, le support étant configuré pour contenir/acheminer un volume de fluide ;
- application d'un matériau poreux sur le support ;
- disposition de la cavité d'air sur le matériau ;
- fourniture de moyens de mesure de la pression dans la cavité d'air ; et
- fourniture de moyens de contrôle de la pression du volume de fluide.

Cette phase de préparation permet de mettre en œuvre le dispositif de mesure selon l'invention avec le matériau dont on souhaite mesurer la perméabilité. Un nouveau module matériau, comprenant le support et le matériau poreux, doit être préparé pour chaque nouvelle mesure. En effet, pour pouvoir réaliser des mesures sélectives de flux à travers la couche de matériau poreux, il est nécessaire de pouvoir garantir l'étanchéité au niveau des interfaces. Pour cela, une jonction étanche entre les deux matériaux est prévue pour la préparation du module matériau.

Pour cela, le support d'une précédente mesure peut être réutilisé en y disposant un nouveau matériau poreux à mesurer. Ceci est notamment indiqué pour des matériaux résistants pouvant être fixés au support de manière amovible, par exemple par serrage.

Alternativement, un nouveau support doit être utilisé pour chaque nouveau matériau poreux à mesurer, dans le cas où le matériau doit être fixé au support de manière permanente, par exemple par collage.

La pièce de connexion avec la cavité d'air peut être réutilisée avec plusieurs modules matériau différents, cette pièce étant fixée au module matériau de manière interchangeable.

## Description des figures et modes de réalisation

D'autres avantages et caractéristiques apparaîtront à l'examen de la description détaillée d'exemples nullement limitatifs, et des dessins annexés sur lesquels :

- [Fig.1] la [Fig.1] est une représentation schématique, dans une vue éclatée, d'un exemple de réalisation non-limitatif d'un dispositif de mesure pouvant être mis en œuvre dans le cadre de la présente invention ;
- [Fig.2] la [Fig.2] est une représentation schématique partielle en coupe du dispositif de mesure de la [Fig.1] ;
- [Fig.3] la [Fig.3] est une représentation schématique d'une coupe partielle d'une couche de matériau poreux traversée par un microcanal, mise en œuvre dans un dispositif selon un mode de réalisation de l'invention ;
- [Fig.4] la [Fig.4] est une représentation schématique, dans une vue éclatée, d'un autre exemple de réalisation non-limitatif d'un dispositif de mesure pouvant être mis en œuvre dans le cadre de la présente invention ;
- [Fig.5] la [Fig.5] est une représentation schématique d'un exemple de réalisation non limitatif d'un procédé de mesure selon l'invention ;

- [Fig.6] la [Fig.6] est un exemple de mesure de débit obtenue avec la présente invention ;
- [Fig.7] la [Fig.7] est un exemple de mesure de pression obtenue avec la présenté invention ;
- [Fig.8] la [Fig.8] est un autre exemple de mesure de pression obtenue avec la présente invention ;
- [Fig.9] la [Fig.9] est encore un autre exemple de mesure de pression obtenue avec la présente invention ; et
- [Fig.10] la [Fig.10] est encore un autre exemple de mesure de pression, pour différents matériaux poreux, obtenue avec la présente invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures, les éléments communs à plusieurs figures peuvent conserver la même référence.

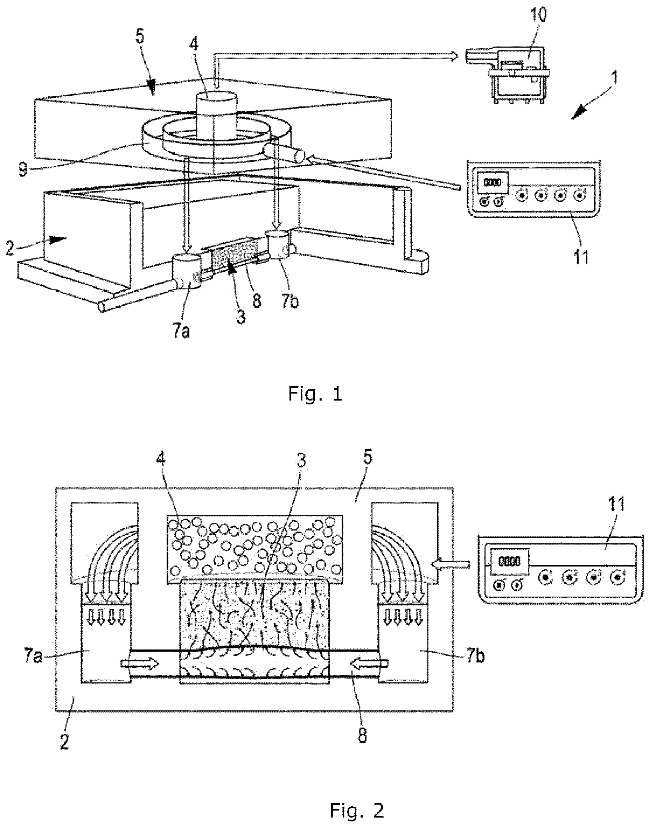

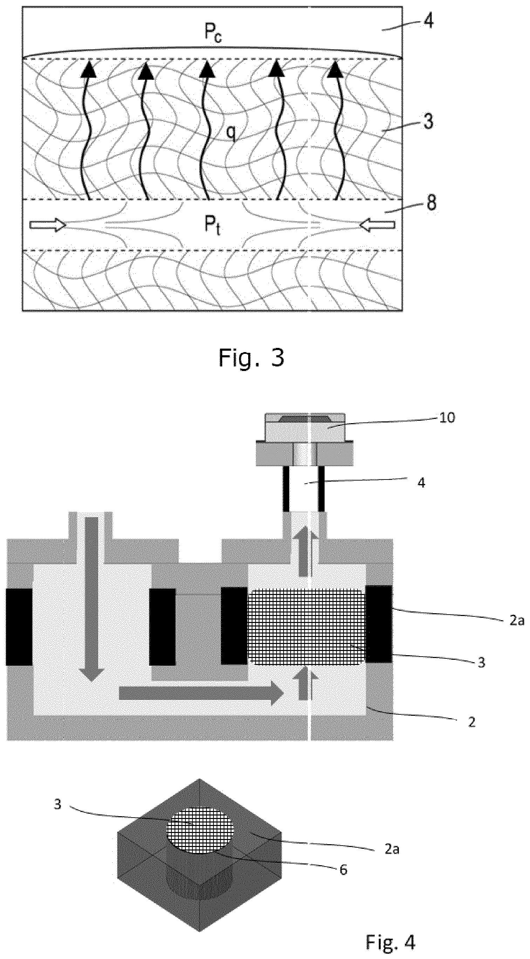

Des modes de réalisation d'un dispositif de mesure pouvant être mis en œuvre dans le cadre de la présente invention seront décrits par la suite en référence aux Figures 1, 2 et 4. La [Fig.1] est une vue schématique semi-éclatée d'un exemple d'un dispositif de mesure. La [Fig.2] est une vue en coupe partielle du dispositif de mesure de la [Fig.1]. La [Fig.4] est une vue schématique d'un autre exemple d'un dispositif de mesure.

Le dispositif 1, tel que représenté dans le mode de réalisation des Figures 1 et 2, comprend un support 2 dans lequel sont agencés une couche de matériau poreux 3 ainsi qu'une cavité d'air 4. L'ensemble comportant le support 2 et la couche de matériau poreux 3 peut être considéré comme un module matériau. La couche de matériau poreux 3 est collée à son emplacement prévu dans le support 2, par la surface inférieure de la couche.

De préférence, le support 2 est en polydiméthylsiloxane (PDMS). Bien entendu, d'autres matériau, notamment polymères, peuvent être utilisés pour le support 2.

Le dispositif 1 comprend en outre une cavité 4 renfermant de l'air. Dans l'exemple représenté sur les Figures 1 et 2, la cavité d'air 4 est réalisée dans une pièce de connexion 5. La pièce de connexion 5 peut être une pièce imprimée en 3D, ou une pièce usinée. La cavité d'air 4 a un volume déterminé. L'une des parois de la cavité d'air 4 est formée par la couche de matériau poreux 3.

Dans l'exemple de mise en œuvre du dispositif 1 représenté sur les Figures 1 et 2, le support 2 comporte un système de canaux pour contenir et acheminer un volume de liquide vers la couche de matériau poreux 3. Le système de canaux comprend deux canaux latéraux 7a, 7b qui sont en communication fluidique avec un microcanal 8 et la cavité d'air 4.

Le microcanal 8 est réalisé par le passage d'une aiguille dans le matériau poreux. Dans le cas du collagène, l'aiguille est insérée alors que le collagène est sous forme de gel. Le gel est ensuite réticulé, et lorsque le gel de collagène devient solide, l'aiguille est retirée, permettant de créer le passage pour le fluide.

Après retrait de l'aiguille, il persiste un canal 8 à travers la couche de matériau poreux 3, près du côté opposé au côté adjacent à la cavité d'air 4. Une épaisseur importante de la couche de matériau poreux 3 se trouve ainsi entre la cavité d'air 4 déterminé et le fluide dans le microcanal 8. C'est l'épaisseur H de la couche 3 entre le microcanal 8 et la cavité d'air qui est considérée pour la détermination de la perméabilité du matériau poreux.

Le liquide est, par exemple, de l'eau.

La pièce de connexion 5 comprend une deuxième cavité 9 par laquelle une pression $P_B$ peut être appliquée au volume de fluide. Dans l'exemple de réalisation montré sur les Figures 1 et 2, cette cavité 9, dite de contrôle, a une forme annulaire et est agencée autour de la cavité d'air 4.

Afin de contrôler la pression dans la cavité de contrôle 9, le dispositif 1 comprend des moyens de contrôle de pression, tel qu'un contrôler de pression 11.

Le dispositif 1 selon l'invention comprend également des moyens de mesure de pression. Ils sont notamment utilisés pour mesurer la pression $P_C$ dans la cavité d'air 4. Les moyens de mesure de pression comprennent un capteur de pression 10 à distance. Le capteur de pression 10 peut être relié à la cavité d'air 4 avec un tuyau (non représenté) de volume calibré. Le volume du tuyau est alors ajouté à celui de la cavité d'air 4.

Le contrôleur de pression 11 et le capteur de pression 10 peuvent être interfacés par un logiciel adapté, de type Labview (marque déposée de la société National Instruments), pour réaliser le contrôle de pression et l'acquisition de mesures de pression.

Le dispositif comprend en outre des moyens numériques pour déterminer la perméabilité du matériau poreux 3. Ces moyens numériques comprennent au moins un ordinateur, une unité centrale ou de calcul, un microprocesseur, et/ou des moyens logiciels adaptés.

Ainsi, lors de la mise en œuvre du dispositif 1 pour mesurer la perméabilité du matériau poreux 3, une pression $P_B$ est appliquée par les moyens de contrôle au volume de fluide, en contrôlant la pression $P_C$ dans la cavité de contrôle 9. La [Fig.3] montre une coupe partielle d'une couche de matériau poreux 3 traversée par un microcanal 8, la surface inférieure de la couche de matériau 3 étant fixée sur son support (non représenté). Lorsque la pression $P_B$ dans la cavité de contrôle est augmentée, un flux de fluide se trouvant dans le système de canaux et dans le microcanal 8 est induit à traverser le matériau poreux 3 et vers la cavité d'air 4. Le flux de fluide peut être caractérisé par sa vitesse d'écoulement, q. Le volume d'air dans la cavité d'air 4 va alors diminuer, et la pression $P_C$ de l'air augmenter. En mesurant la variation de la pression dans la cavité d'air 4 ainsi que le débit du fluide, la perméabilité du matériau poreux 3 peut être déterminée.

Un autre mode de réalisation du dispositif selon l'invention est représenté sur la [Fig.4]. Le dispositif 1 comprend également un support 2 dans lequel sont agencés une couche de matériau poreux 3 ainsi qu'une cavité d'air 4. La couche de matériau poreux 3 n'est ni collée, ni posée sur le support 2. Le matériaux 3 est suspendu par ces bords latéraux dans une perforation 6 d'une pièce de support 2a. De préférence, le matériau 3 se présente sous la forme d'une membrane qui est clampée sur ses bords dans la perforation 6. La surface inférieure et la surface supérieure du matériau 3 sont donc libres de mouvement. La pièce de support 2a est positionnée dans le support 2 de sorte à ce qu'un liquide puisse s'écouler à travers le matériau 3 vers la cavité d'air 4. Un capteur de pression 10 referme la cavité d'air 4. La pièce de support 2a est amovible, facilitant la mise en place d'autres matériaux dans le dispositif 1.

Pour éviter des variations de température pouvant engendrer des changements de pression d'air dans les cavités, le dispositif peut être pourvu d'un boitier de protection, par exemple un boitier en plastique. Ceci permet de garantir la stabilité et l'uniformité de la température dans le dispositif.

Le dispositif 1 selon les modes de réalisation représentés sur les Figures 1, 2 et 4 peut être utilisé pour mettre en œuvre les étapes d'un procédé de détermination qui seront décrites par la suite.

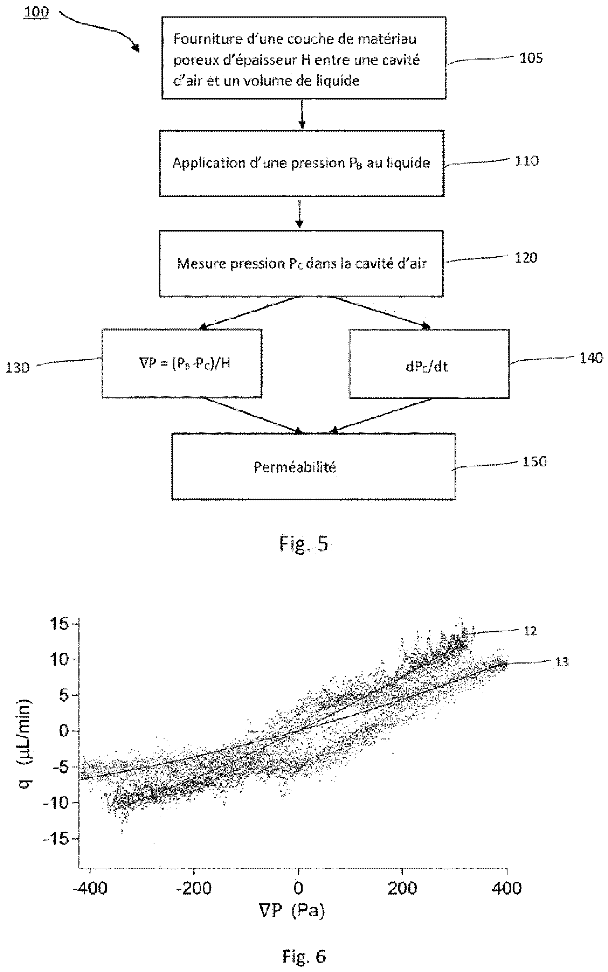

La [Fig.5] est une représentation schématique d'un exemple de réalisation non limitatif d'un procédé de détermination de la perméabilité d'un matériau poreux selon l'invention.

Le procédé 100, représenté sur la [Fig.5], comprend une étape 105 de préparation lors de laquelle la couche de matériau poreux dont la perméabilité doit être déterminé est mise en place entre une cavité d'air et un volume de fluide. La couche de matériau a une épaisseur H connue. Pour cela, la couche de matériau poreux est posée dans un support de sorte à ce que la cavité d'air se trouve directement d'un côté de la couche et le fluide de l'autre côté. Cette mise en place peut être réalisée au moyen d'un module matériau et d'une pièce de connexion 5 comme décrit ci-dessus en référence aux Figures 1 et 2. Ensuite, des moyens pour mesurer la pression dans la cavité d'air et pour contrôler la pression appliquée sur le fluide peuvent être fournis, comme décrit ci-dessus.

Cette étape 105 de préparation permet de mettre en place le dispositif de mesure avec le matériau souhaité. Le dispositif 1 peut être tel que décrit en référence aux Figures 1 et 2. La pièce de connexion 5 avec la cavité d'air peut être réutilisée avec d'autres modules matériau. La pièce de connexion 5 est fixée au module matériau de manière interchangeable. Des joints d'étanchéité tels que des tores de caoutchouc classique peuvent être utilisés pour réaliser cet assemblage. Lorsque le matériau poreux est du collagène ou un autre matériau fragile de ce type, le module matériau doit être préparé de nouveau pour chaque nouvelle mesure d'un matériau poreux car le collagène doit être collé au support. D'autres matériaux poreux peuvent être retirés du support, ce dernier pouvant donc être réutilisé.

Le procédé 100 comprend une étape 110 d'application d'une pression $P_B$ au volume de fluide. La pression dans la cavité de contrôle 9 peut notamment être contrôlée en sorte qu'elle augmente à une valeur déterminée. Ainsi, la pression $P_B$ dans le microcanal 8 dans la couche de matériau poreux 3 augmente et du fluide traverse le matériau poreux et s'accumule dans la cavité d'air 4.

Lorsque le fluide est un liquide, le volume de l'air dans la cavité d'air 4 diminue et, en conséquence, la pression de l'air dans la cavité 4 augmente en fonction du flux à travers la couche de matériau poreux.

Lorsque le fluide est un gaz, le nombre de molécules composantes de l'air déjà présent dans la cavité et du gaz (qui peut être de l'air aussi) augmente dans la cavité, et donc la pression dans celle-ci.

Lors d'une étape 120 de mesure, la pression $P_C$ dans la cavité d'air 4 est mesurée en fonction du temps.

A partir de la mesure de la pression $P_C$ dans la cavité d'air, le gradient de pression entre le volume de fluide et la cavité d'air peut être déterminé lors d'une étape 130. Ce gradient de pression est exprimé de la façon suivante :

[Math.1]

$$\nabla P = \frac{(P_B - P_C)}{H}.$$

Simultanément, le débit du fluide à travers le matériau poreux peut être déterminé, lors d'une étape 140 du procédé, à partir de la dérivée temporelle de la pression de l'air $P_C$ dans la cavité, $dP_C/dt$.

La quantité de fluide traversant le matériau pendant un intervalle de temps dt est égale à qSdt, avec S la surface du microcanal dans le matériau poreux et q la vitesse d'écoulement du fluide. Le coefficient de compressibilité de l'air, à température T constante, peut être défini comme suit :

[Math.2]

$$\beta = -\frac{1}{V}\left(\frac{\partial V}{\partial P}\right)_{T=constant}.$$

Dans le cas d'un écoulement unidirectionnel de bas nombre de Reynolds, le coefficient de perméabilité $\kappa$ est défini avec la loi de Darcy,

[Math.3]

$$q = -\frac{\kappa}{\mu}\frac{dP}{dx},$$

avec $\mu$ le coefficient de viscosité du fluide et dP/dx = $(P_B-P_C)$/H le gradient de pression. Le coefficient $\mu$ caractérise la viscosité du fluide (par exemple, 0,001 Pa·s pour l'eau). On en déduit que

[Math.4]

$$dP_C = -\frac{1}{\beta}\frac{dV_C}{V_C} = \frac{1}{\beta}\frac{qSdt}{V_C} = \frac{1}{\beta}\frac{S}{V_C}\frac{\kappa}{\mu}\frac{(P_B-P_C)}{H}dt.$$

La dérivée temporelle de la pression $P_C$ dans la cavité s'écrit alors

[Math.5]

$$\frac{dP_C}{dt} = \frac{1}{\beta}\frac{S}{V_C H}\frac{\kappa}{\mu}\left(P_B - P_C\right).$$

Le facteur $\beta$ est la compressibilité de l'air à température ambiante, et $V_C$ est le volume de la cavité d'air. Ce volume $V_C$ peut être ajusté selon le débit de fluide que l'on s'attend à mesurer. Dans ce mode de réalisation et en appliquant une pression d'entrée $P_M$, il est possible d'intégrer la déformation mécanique du matériau à la variation de pression dans la cavité avec un modèle simplifié à une dimension :

[Math.6]

$$P(H, t) = P_M\left(1-2\sum_{n=1}^{\infty}\frac{\sin(2\lambda_n)e^{-\frac{\lambda_n^2 t}{\tau}}}{\sin(2\lambda_n)+2\lambda_n}\right),$$

avec $\tau = \mu H^2/\kappa M$ et $\lambda_n$ les racines de l'équation $\alpha\lambda_n\tan(\lambda_n) = 1$, avec $\alpha = \beta V_C M/SH$. $M$ est défini comme le module élastique du matériau à une dimension.

Lors d'une étape 150 du procédé 100, la perméabilité $\kappa$ du matériau poreux est déterminée à partir de la relation [Math5].

Dans le cas d'un hydrogel, la perméabilité est de l'ordre de $10^{-12}$ à $10^{-20}$ m$^2$.

Dans l'expression [Math4], les paramètres H et S sont des facteurs géométriques du matériau. Ces facteurs peuvent être corrigés par des simulations numériques d'écoulement si la géométrie du dispositif de mesure avec le matériau poreux est complexe.

Par la suite, des exemples de mises en œuvre du procédé et du dispositif selon l'invention seront décrits.

Selon un premier exemple, la perméabilité du collagène est déterminée, pour des collagènes de type IP et IA fournis par la société Nitta Gelatin, qui correspondent à de la gélatine de tendon de porc respectivement extraite par voie enzymatique (pepsine) ou par voie chimique en milieu acide.

La cavité d'air est connectée à un tube de longueur 45 cm et de diamètre 3 mm, soit un volume total de 3,6 mL. Afin de contrôler la pression dans la cavité, un signal triangle d'amplitude 1000 Pa et une période de 500 s répétée 10 fois est appliqué dans le tube. La vitesse d'échantillonnage est de 500 ms.

La [Fig.6] montre une mesure du débit q du collagène en fonction du différentiel de pression appliqué sur la matrice de collagène, pour les collagènes de type IP (points de mesure référencés 12) et IA (points de mesure référencés 13). Une hystérésis de la réponse selon la montée ou la descente en pression dans la cavité d'air peut être observée pour les deux graphes. Les données sont moyennées sur 5 s pour chaque point présenté dans le diagramme.

Afin d'obtenir un débit, la variation de pression par unité de temps dans la cavité d'air est multipliée par le volume de la cavité et le coefficient de compressibilité de l'air à pression atmosphérique. Le débit est représenté en fonction du différentiel de pression appliqué entre le tube et la cavité d'air qui est connu par mesure directe en temps réel.

Dans le diagramme de la [Fig.6], les réponses q($\Delta P$) ont été fittées avec un polynôme d'ordre 4 décrit dans Rosti et al., « The Breakdown of Darcy's Law in a Soft Porous Material », Soft Matter 16, 939-944 (2020) (lignes pleines). Le flux de perméation $Q$ est fonction d'un polynôme d'ordre 4 de la différence de pression $\Delta P$ :

$$[Math.7]$$
$$Q \propto D^2 \varphi^3 f(\Delta P),$$

avec D le diamètre des pores du matériau, $\varphi$ sa porosité et

$$[Math.8]$$
$$f(\Delta P) = \frac{1}{12}\left(\Delta P + \frac{3}{2}\frac{\Delta P^2}{G} + \frac{\Delta P^3}{G^2} + \frac{1}{4}\frac{\Delta P^4}{G^3}\right),$$

où G est le module de cisaillement du collagène.

Les modules de cisaillement mesurés sont de 2982 Pa et 4433 Pa, pour les collagènes IA et IP, respectivement.

Selon un deuxième exemple, la barrière de cellules d'un tissu endothélial est caractérisée.

Dans cet exemple, le microcanal en collagène tel que décrit plus haut est recouvert avec une solution de cellules endothéliales de la veine ombilicale humaine (HUVEC pour *Human umbilical vein endothelial cells*) à une concentration de 10 millions de cellules par mL, deux fois pendant 5 min. Les cellules sont ensuite incubées pendant 1 à 3 jours à 37°C et 5% de $CO_2$ dans l'incubateur.

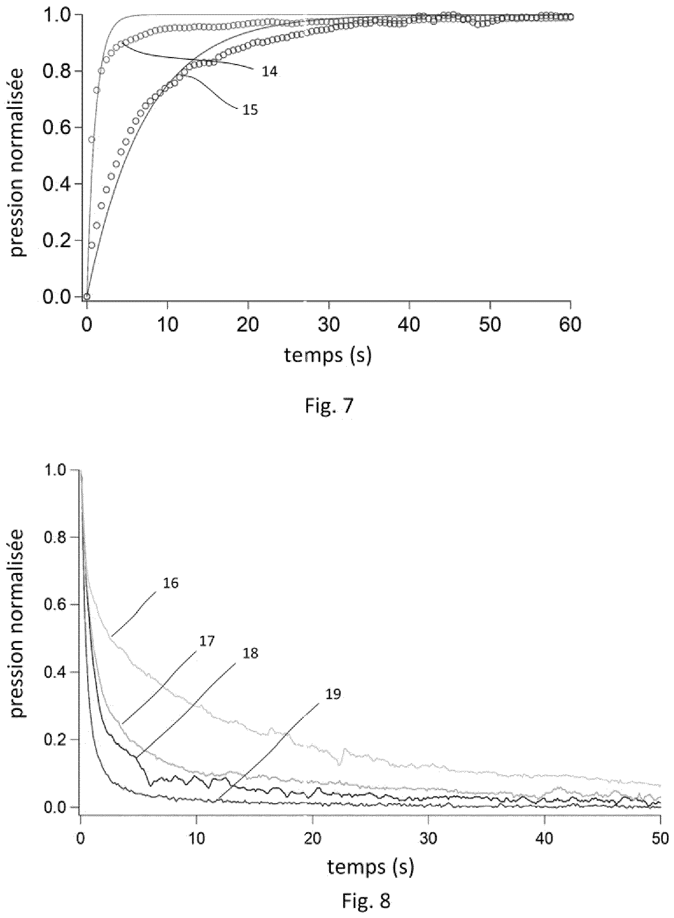

La [Fig.7] montre la mesure de la réponse en pression $P_C(t)$ dans la cavité d'air après l'application d'une pression de 100 Pa dans le microcanal avec (points de mesure référencés 15) ou sans (points de mesure référencés 14) cellules HUVEC. La mesure de la résistance hydrodynamique de la barrière cellulaire est faite en fittant la réponse temporelle en pression $P_C(t)$ dans la cavité d'air avec l'équation suivante :

$$[Math.9]$$
$$P_C = P_B\left(1 - e^{\frac{t}{\tau}}\right),$$

dans laquelle $\tau$ est une constante temporelle dépendante de la perméabilité du matériau poreux et de la viscosité du fluide. Le fit est présenté en lignes pleines dans le diagramme de la [Fig.7]. Le fit aux courbes 14 et 15 peut être amélioré en intégrant une élasticité du matériau dans le modèle, sur la base de l'équation [Math6].

On obverse sur la [Fig.7] une réponse en pression plus rapide dans le cas du collagène sans barrière cellulaire. En effet, la barrière de cellules réduit le flux de fluide, ce qui engendre une montée en pression dans la cavité d'air plus lente.

Selon un troisième exemple, la réponse d'une matrice de collagène, pouvant être chargée ou non de cellules fibroblastes, est mesurée.

Les concentrations en collagène utilisées sont de 2,4 mg/mL, 1,9 mg/mL et 1,4 mg/mL. Pour la mesure avec les fibroblastes, la concentration en fibroblastes est de 40 cellules par μL de collagène dilué à une concentration de 2,4 mg/mL pour un volume total de collagène de 30 μl. Après 5 jours de maturation, le collagène et les cellules sont fixés avec de la paraformaldéhyde à 4% en volume (PFA) pendant 30 min puis rincé cinq fois avec de l'eau déionisée.

La mesure de la pression dans la cavité d'air est effectuée après mise sous pression de la cavité d'air à 100 Pa. La pression est ensuite relâchée dans le microcanal de collagène. On observe alors un flux allant de la cavité vers le tube et, par conséquent, une chute de pression dans la cavité.

La [Fig.8] représente les mesures de décharge de la pression dans la cavité d'air pour des concentrations de collagènes de 2,4 mg/mL avec fibroblastes (graphe 16), 2,4 mg/mL sans fibroblastes (graphe 17), 1,9 mg/mL (graphe 18) et 1,4 mg/mL (graphe 19). Il apparait que la cinétique de la décharge de la pression dans la cavité d'air dépend de la concentration en collagène, ainsi que de la présence de fibroblastes dans la matrice.

Selon un quatrième exemple, la réponse mécanique d'une couche, ou membrane, de collagène sous une contrainte de pression hydrostatique est caractérisée.

Cette caractérisation est réalisée avec un dispositif de mesure dans lequel le collagène puisse subir des déformations. Elle est par exemple réalisée dans un dispositif tel qu'illustré sur la [Fig.4], dans lequel la couche de matériau est suspendue par ses bords latéraux. Dans ce cas, le matériau poreux est libre de se déformer dans la direction du flux appliqué.

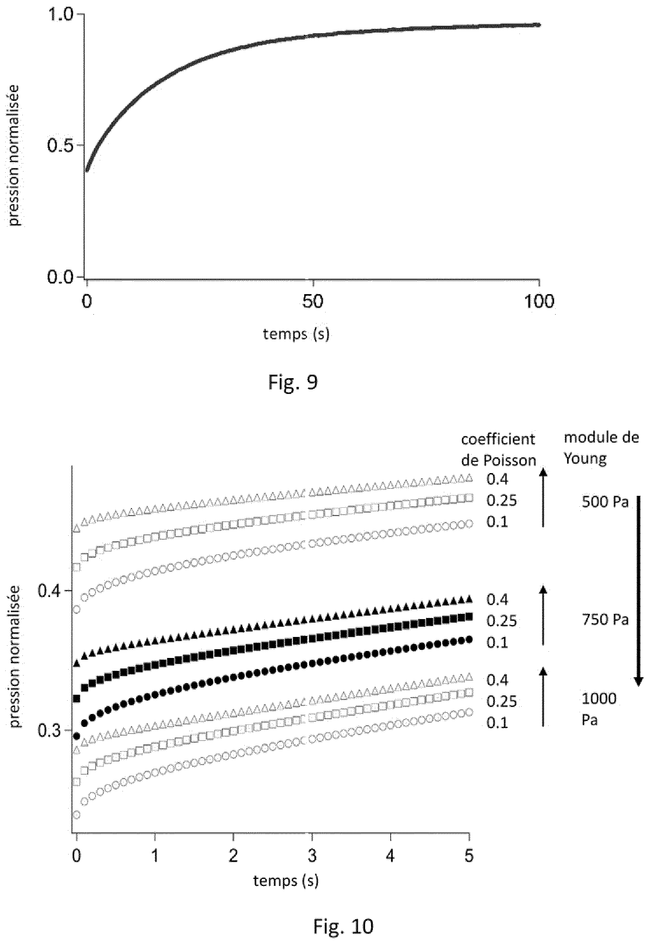

La [Fig.9] montre la réponse en pression normalisée dans la cavité d'air en utilisant une couche de collagène après l'application d'une marche de pression de 100 Pa. Le gel de collagène est fabriqué selon la même méthode que dans le troisième exemple 3.

On constate qu'au moment t = 0, la pression normalisée est supérieure à 0, contrairement aux courbes montrées sur la [Fig.7]. Cette augmentation abrupte est due au fait que la couche de collagène se déforme immédiatement par flambage lorsqu'elle est soumise à une pression hydrostatique. Cette déformation mécanique réduit le volume de la cavité d'air 4. Comme une instabilité de flambage est déterminée par le module d'élasticité du matériau, le saut rapide permet d'accéder à ce module d'élasticité. Ensuite, le champ de pression se propage dans le matériau, ce qui conduit à une modification de la forme de l'interface supérieure du matériau dans la cavité (déterminée par le coefficient de Poisson) et un transfert de liquide à travers le matériau, dus au flux de perméation. Ceci conduit à une réduction plus lente du volume de la cavité 4. La pression dans la cavité augmente donc en fonction à la fois de la déformation et de la perméabilité du matériau. Ces deux mécanismes ont des échelles de temps très différentes.

La [Fig.10] montre un agrandissement au temps court de la réponse de pression dans la cavité pour un matériau modèle simulé avec le logiciel COMSOL de la société COMSOL, où les propriétés du matériau, en particulier le coefficient de Poisson et le module d'Young, sont variées. Pour trois modules d'Young différents représentés, on note que l'amplitude de la première marche de pression augmente lorsque le module élastique diminue, autrement dit que la déformation par flambage augmente. De plus, il est possible de mesurer le coefficient de Poisson, qui produit des courbes différentes pour tous les modules élastiques selon que sa valeur vaut 0,1, 0,25 ou 0,4. Cette différence est expliquée par le changement de profil de la couche supérieure de collagène sous l'effet de la pression hydrostatique.

En particulier, dans le cas d'un module de Poisson de 0,4, on observe une transition abrupte entre la déformation initiale et la cinétique qui suit. Lorsque le coefficient de Poisson est diminué, on observe une cinétique de plus en plus "adoucie". Des réorganisations structurelles du matériaux, caractérisées par un coefficient de Poisson plus faible, entrainent alors une augmentation du temps nécessaire pour atteindre une même déformation qu'avec un coefficient de Poisson plus élevé.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif (1) de mesure de la perméabilité d'un matériau poreux à un fluide, le dispositif comprenant :

- une cavité d'air (4) d'un volume déterminé ;
- un module matériau, le module matériau comprenant :

• un support (2) configuré pour contenir un volume de fluide, et
• le matériau poreux (3) ;

dans lequel la cavité d'air (4) et le support (2) sont agencés de façon à ce qu'une épaisseur déterminée, H, du matériau poreux (3) se trouve entre le volume de fluide et la cavité d'air, une paroi de la cavité d'air (4) étant partiellement formée par le matériau poreux ;
le dispositif (1) comprenant en outre :

- des moyens de mesure (10) de la pression, $P_C$, dans la cavité d'air (4) en fonction du temps ;
- des moyens de contrôle (11) de la pression du volume de fluide configurés pour appliquer une pression, $P_B$, au volume de fluide de sorte à induire un flux à travers le matériau poreux dans la cavité d'air ;
- des moyens numériques configurés pour :

• déterminer le gradient de pression entre le volume de fluide et la cavité d'air (4), $\nabla P = (P_B - P_C)/H$ ;

• déterminer le débit du fluide à travers le matériau poreux à partir de la dérivée temporelle de la pression de l'air dans la cavité, $dP_C/dt$ ; et

• déterminer la perméabilité du matériau poreux à partir dudit débit et dudit gradient de pression $\nabla P$.

2. Dispositif (1) selon la revendication 1, **caractérisé en ce que** les moyens numériques sont en outre configurés pour déterminer le module d'élasticité du matériau poreux à partir du gradient de pression entre le volume de fluide et la cavité d'air (4), $\nabla P$, en fonction du temps.

3. Dispositif (1) selon la revendication 1 ou 2, **caractérisé en ce que** les moyens de mesure (10) de la pression comprennent un capteur de pression (10) à distance relié à la cavité d'air (4).

4. Dispositif (1) selon l'une quelconque des revendications précédentes, **caractérisé en ce que** le volume de fluide est contenu partiellement dans un microcanal (8) traversant le matériau poreux.

5. Dispositif (1) selon l'une quelconque des revendications précédentes, **caractérisé en ce que** le support (2) est en polydiméthylsiloxane, PDMS.

6. Dispositif (1) selon l'une quelconque des revendications précédentes, **caractérisé en ce que** la cavité d'air (4) est réalisée par impression 3D.

7. Dispositif (1) selon l'une quelconque des revendications précédentes, **caractérisé en ce que** le matériau poreux (3) est collé au support (2).

8. Dispositif (1) selon l'une quelconque des revendications 1 à 6, **caractérisé en ce que** le matériau poreux (3) est disposé sur le support (2) de manière amovible.

9. Procédé (100) pour mesurer la perméabilité d'un matériau poreux (3) à un fluide, dans lequel une épaisseur déterminée, H, du matériau poreux (3) est agencée entre une cavité d'air (4) d'un volume déterminé et un volume du fluide, une paroi de la cavité d'air (4) étant partiellement formée par le matériau poreux (3), le procédé (100) comprenant les étapes suivantes :

- application (110) d'une pression, $P_B$, au volume de fluide de sorte à induire un flux à travers le matériau poreux (3) dans la cavité d'air (4) ;
- mesure (120) de la pression, $P_C$, dans la cavité d'air (4) en fonction du temps ;
- détermination (130) du gradient de pression entre le volume de fluide et la cavité d'air (4), $\nabla P = (P_B - P_C)/H$ ;
- détermination (140) du débit du fluide à travers le matériau poreux (3) à partir de la dérivée temporelle de la pression de l'air dans la cavité (4), $dP_C/dt$ ; et
- détermination (150) de la perméabilité du matériau poreux (3) à partir dudit débit et dudit gradient de pression $\nabla P$.

10. Procédé selon la revendication 9, **caractérisé en ce qu'**il comprend en outre une étape de détermination du module d'élasticité du matériau poreux à partir du gradient de pression entre le volume de fluide et la cavité d'air (4), $\nabla P$, en fonction du temps.

11. Procédé (100) selon la revendication 9 ou 10, **caractérisé en ce que** l'étape (120) de mesure de la pression dans la cavité d'air (4) est réalisée au moyen d'un capteur de pression (10) à distance relié à la cavité d'air (4).

12. Procédé (100) selon l'une quelconques des revendications 9 à 11, **caractérisé en ce que** l'étape (120) de la mesure de la pression dans la cavité d'air (4) est réalisée à intervalle régulier à partir de l'application (110) de la pression, $P_B$, et permettant de suivre l'évolution du débit de fluide sur l'ensemble de la gamme de valeurs de gradient de pression $\nabla P$ comprises entre $P_B/H$ et 0.

13. Procédé (100) selon l'une quelconque des revendications 9 à 12, **caractérisé en ce qu'**il comprend en outre une phase préalable de préparation (105), comprenant les étapes suivantes :

- fourniture d'un support (2) de matériau, de la cavité d'air (4) et du matériau poreux (3), le support (2) étant configuré pour contenir un volume de fluide ;
- application du matériau poreux (3) sur le support (2) ;

- disposition de la cavité d'air (4) sur le matériau;
- fourniture de moyens de mesure (10) de la pression dans la cavité d'air (4) ; et
- fourniture de moyens de contrôle (11) de la pression du volume de fluide.

**Patentansprüche**

1. Vorrichtung (1) zur Messung der Durchlässigkeit eines porösen Materials für ein Fluid, wobei die Vorrichtung umfasst:

    - einen Lufthohlraum (4) mit einem bestimmten Volumen;
    - ein Materialmodul, wobei das Materialmodul umfasst:

        • einen Behälter (2), der so konfiguriert ist, dass er ein Fluidvolumen aufnimmt, und
        • das poröse Material (3);

    wobei der Lufthohlraum (4) und der Behälter (2) so angeordnet sind, dass sich eine bestimmte Dicke, H, des porösen Materials (3) zwischen dem Fluidvolumen und dem Lufthohlraum befindet, wobei eine Wand des Lufthohlraums (4) teilweise durch das poröse Material gebildet ist;
    die Vorrichtung (1) ferner umfassend:

        - Messmittel (10) für den Druck, $P_C$, in dem Lufthohlraum (4) in Abhängigkeit von der Zeit;
        - Mittel (11) zum Regeln des Drucks des Fluidvolumens, die so konfiguriert sind, dass sie einen Druck, $P_B$, auf das Fluidvolumen ausüben, um einen Fluss durch das poröse Material in den Lufthohlraum zu induzieren;
        - digitale Mittel, die für Folgendes konfiguriert sind:

            • Bestimmen des Druckgradienten zwischen dem Fluidvolumen und dem Lufthohlraum (4), $VP = (P_B - P_C)/H$;
            • Bestimmen des Fluiddurchflusses durch das poröse Material anhand der zeitlichen Ableitung des Luftdrucks in dem Hohlraum, $dP_C/dt$; und
            • Bestimmen der Durchlässigkeit des porösen Materials anhand des Durchflusses und des Druckgradienten VP.

2. Vorrichtung (1) nach Anspruch 1, **dadurch gekennzeichnet, dass** die digitalen Mittel ferner so konfiguriert sind, dass sie den Elastizitätsmodul des porösen Materials anhand des Druckgradienten zwischen dem Fluidvolumen und dem Lufthohlraum (4), VP, in Abhängigkeit von der Zeit bestimmen.

3. Vorrichtung (1) nach Anspruch 1 oder 2, **dadurch gekennzeichnet, dass** die Druckmessmittel (10) einen mit dem Lufthohlraum (4) verbundenen Ferndrucksensor (10) umfassen.

4. Vorrichtung (1) nach einem der vorhergehenden Ansprüche, **dadurch gekennzeichnet, dass** das Fluidvolumen teilweise in einem Mikrokanal (8) aufgenommen ist, der das poröse Material durchdringt.

5. Vorrichtung (1) nach einem der vorhergehenden Ansprüche, **dadurch gekennzeichnet, dass** der Behälter (2) aus Polydimethylsiloxan, PDMS, besteht.

6. Vorrichtung (1) nach einem der vorhergehenden Ansprüche, **dadurch gekennzeichnet, dass** der Lufthohlraum (4) durch 3D-Druck hergestellt ist.

7. Vorrichtung (1) nach einem der vorhergehenden Ansprüche, **dadurch gekennzeichnet, dass** das poröse Material (3) mit dem Behälter (2) verklebt ist.

8. Vorrichtung (1) nach einem der Ansprüche 1 bis 6, **dadurch gekennzeichnet, dass** das poröse Material (3) auf dem Behälter (2) abnehmbar angeordnet ist.

9. Verfahren (100) zum Messen der Durchlässigkeit eines porösen Materials (3) für ein Fluid, wobei eine bestimmte Dicke, H, des porösen Materials (3) zwischen einem Lufthohlraum (4) mit einem bestimmten Volumen und einem Volumen des Fluids angeordnet ist, wobei eine Wand des Lufthohlraums (4) teilweise durch das poröse Material (3) gebildet ist, wobei das Verfahren (100) die folgenden Schritte umfasst:

- Ausüben (110) eines Drucks, $P_B$, auf das Fluidvolumen, so dass ein Fluss durch das poröse Material (3) in den Lufthohlraum (4) induziert wird;
- Messen (120) des Drucks, $P_C$, in dem Lufthohlraum (4) in Abhängigkeit von der Zeit;
- Bestimmen (130) des Druckgradienten zwischen dem Fluidvolumen und dem Lufthohlraum (4), $VP = (P_B - P_C)/H$;
- Bestimmen (140) des Durchflusses des Fluids durch das poröse Material (3) anhand der zeitlichen Ableitung des Luftdrucks in dem Hohlraum (4), $dP_C/dt$; und
- Bestimmen (150) der Durchlässigkeit des porösen Materials (3) anhand des Durchflusses und des Druckgradienten VP.

10. Verfahren nach Anspruch 9, **dadurch gekennzeichnet, dass** es ferner einen Schritt des Bestimmens des Elastizitätsmoduls des porösen Materials anhand des Druckgradienten zwischen dem Fluidvolumen und dem Lufthohlraum (4), VP, in Abhängigkeit von der Zeit umfasst.

11. Verfahren (100) nach Anspruch 9 oder 10, **dadurch gekennzeichnet, dass** der Schritt (120) des Messens des Drucks in dem Lufthohlraum (4) mittels eines mit dem Lufthohlraum (4) verbundenen Ferndrucksensors (10) durchgeführt wird.

12. Verfahren (100) nach einem der Ansprüche 9 bis 11, **dadurch gekennzeichnet, dass** der Schritt (120) des Messens des Drucks in dem Lufthohlraum (4) in regelmäßigen Abständen ab dem Ausüben (110) des Drucks, $P_B$, durchgeführt wird und es ermöglicht, die Entwicklung des Fluiddurchflusses über den gesamten Bereich der Druckgradientenwerte VP zwischen $P_B/H$ und 0 zu verfolgen.

13. Verfahren (100) nach einem der Ansprüche 9 bis 12, **dadurch gekennzeichnet, dass** es ferner eine vorangehende Vorbereitungsphase (105) umfasst, die die folgenden Schritte umfasst:

- Bereitstellen eines Behälters (2) aus einem Material, des Lufthohlraums (4) und des porösen Materials (3), wobei der Behälter (2) so konfiguriert ist, dass er ein Fluidvolumen aufnimmt;
- Auftragen des porösen Materials (3) auf den Behälter (2);
- Anordnen des Lufthohlraums (4) auf dem Material;
- Bereitstellen von Messmitteln (10) für den Druck in dem Lufthohlraum (4); und
- Bereitstellen von Regelungsmitteln (11) für den Druck des Fluidvolumens.

**Claims**

1. Device (1) for measuring the permeability of a porous material to a fluid, the device comprising:

- an air cavity (4) having a determined volume;
- a material module, the material module comprising:

  • a support (2) configured to contain a volume of fluid, and
  • the porous material (3);

wherein the air cavity (4) and the support (2) are arranged in such a way that a determined thickness H of the porous material (3) lies between the volume of fluid and the air cavity, one wall of the air cavity (4) being partially formed by the porous material;
the device (1) further comprising:

- means (10) for measuring the pressure, $P_C$, in the air cavity (4) as a function of time;
- means (11) for controlling the pressure of the volume of fluid, which are configured to apply a pressure $P_B$ to the volume of fluid so as to induce a flow through the porous material into the air cavity;
- digital means configured to:

  • determine the pressure gradient $VP = (P_B - P_C)/H$ between the volume of fluid and the air cavity (4);
  • determine the flow rate of the fluid through the porous material from the time derivative $dP_C/dt$ of the air pressure in the cavity; and
  • determine the permeability of the porous material from the said flow rate and the said pressure gradient $\nabla P$.

**2.** Device (1) according to Claim 1, **characterised in that** the digital means are further configured to determine the modulus of elasticity of the porous material from the pressure gradient VP between the volume of fluid and the air cavity (4) as a function of time.

**3.** Device (1) according to Claim 1 or 2, **characterised in that** the means (10) for measuring the pressure comprise a remote pressure sensor (10) connected to the air cavity (4).

**4.** Device (1) according to any one of the preceding claims, **characterised in that** the volume of fluid is partially contained in a microchannel (8) passing through the porous material.

**5.** Device (1) according to any one of the preceding claims, **characterised in that** the support (2) is made of polydimethylsiloxane, PDMS.

**6.** Device (1) according to any one of the preceding claims, **characterised in that** the air cavity (4) is produced by 3D printing.

**7.** Device (1) according to any one of the preceding claims, **characterised in that** the porous material (3) is bonded to the support (2).

**8.** Device (1) according to any one of Claims 1 to 6, **characterised in that** the porous material (3) is removably disposed on the support (2).

**9.** Method (100) for measuring the permeability of a porous material (3) to a fluid, wherein a determined thickness H of the porous material (3) is arranged between an air cavity (4) having a determined volume and a volume of the fluid, one wall of the air cavity (4) being partially formed by the porous material (3), the method (100) comprising the following steps:

- applying (110) a pressure, $P_B$, to the volume of fluid so as to induce a flow through the porous material (3) into the air cavity (4);
- measuring (120) the pressure $P_C$ in the air cavity (4) as a function of time;
- determining (130) the pressure gradient $VP = (P_B - P_C)/H$ between the volume of fluid and the air cavity (4);
- determining (140) the flow rate of the fluid through the porous material (3) based on the time derivative of the air pressure in the cavity (4), $dP_C/dt$; and
- determining (150) the permeability of the porous material (3) from the said flow rate and the said pressure gradient VP.

**10.** Method according to Claim 9, **characterised in that** it further comprises a step of determining the modulus of elasticity of the porous material from the pressure gradient VP between the volume of fluid and the air cavity (4) as a function of time.

**11.** Method (100) according to Claim 9 or 10, **characterised in that** the step (120) of measuring the pressure in the air cavity (4) is carried out by means of a remote pressure sensor (10) connected to the air cavity (4).

**12.** Method (100) according to any one of Claims 9 to 11, **characterised in that** the step (120) of measuring the pressure in the air cavity (4) is carried out at regular intervals as of the application (110) of the pressure $P_B$ and allowing tracking the variation of the fluid flow rate over the entire range of pressure gradient values VP between $P_B/H$ and 0.

**13.** Method (100) according to any one of Claims 9 to 12, **characterised in that** it further comprises a preliminary preparation phase (105) comprising the following steps:

- providing a material support (2), the air cavity (4) and the porous material (3), the support (2) being configured to contain a volume of fluid;
- applying the porous material (3) to the support (2);
- arranging the air cavity (4) on the material;
- providing means (10) for measuring the pressure in the air cavity (4); and
- providing means (11) for controlling the pressure of the volume of fluid.

Fig. 1

Fig. 2

Fig. 3

Fig. 4

Fig. 5

Fig. 6

Fig. 7

Fig. 8

Fig. 9

Fig. 10

## RÉFÉRENCES CITÉES DANS LA DESCRIPTION

**Documents brevets cités dans la description**

- WO 2016190939 A

**Littérature non-brevet citée dans la description**

- Transport of Molecules in the Tumor interstitium : A review. *Cancer Res*, vol. 47, 3039
- Measurement of interstitialfluid pressure : Comparison of Methods. *Annals Biomed Engineering*, vol. 14, 139
- **J.P. OLLIVIER** ; **M. MASSAT**. Permeability and microstructure of concrete: a review of modelling. *Cement and Concrete Research*, 1992, vol. 22, 503-514
- **ROSTI et al.** The Breakdown of Darcy's Law in a Soft Porous Material. *Soft Matter*, 2020, vol. 16, 939-944